# EUROPÄISCHE PATENTSCHRIFT

(11) **EP 3 520 616 B1**
(45) Veröffentlichungstag und Bekanntmachung des Hinweises auf die Patenterteilung: **20.09.2023**
(21) Anmeldenummer: 19154760.3
(22) Anmeldetag: 31.01.2019
(51) Int. Cl.: A21B 3/13, A21B 3/15, B32B 29/06, B65D 81/34, B32B 7/12, B32B 15/12, B32B 15/20, B65D 1/36, B65D 5/02, B65D 65/40

(54) **ALUMINIUM-PAPIER-VERBUNDFOLIE FÜR LEBENSMITTELBEHÄLTER, INSBESONDERE MENÜSCHALEN ODER FALTSCHACHTELN, VERFAHREN ZU DEREN HERSTELLUNG SOWIE VERWENDUNG DERSELBEN**
ALUMINIUM-PAPER COMPOUND FILM FOR FOOD CONTAINERS, IN PARTICULAR FOR DINNER TRAYS OR BOXES, METHOD FOR THEIR PREPARATION AND THEIR USE
FEUILLE COMPOSITE EN PAPIER D'ALUMINIUM POUR RÉCIPIENTS ALIMENTAIRES, EN PARTICULIER PLATEAUX-REPAS OU BOÎTES PLIANTES, SON PROCÉDÉ DE FABRICATION AINSI QUE SON UTILISATION

(30) Priorität: 01.02.2018 DE 102018102267; 26.10.2018 DE 102018126860
(43) Veröffentlichungstag der Anmeldung: 07.08.2019
(73) Patentinhaber: Speira GmbH, 41515 Grevenbroich (DE)
(72) Erfinder: WECKOPP, Martina, 47608 Geldern (DE); HEISTER, Guido, 41515 Grevenbroich (DE)
(74) Vertreter: Cohausz & Florack

(56) Entgegenhaltungen:
- EP-A1- 0 392 227
- EP-B1- 0 392 227
- CN-U- 202 881 771
- CN-Y- 201 224 558
- DE-A1- 3 025 373
- US-A- 2 242 684
- US-A- 2 407 118
- US-A- 3 033 101
- US-A1- 2005 013 951
- US-A1- 2005 244 599
- US-A1- 2011 031 375
- US-A1- 2016 157 671

## Beschreibung

Die Erfindung betrifft eine Aluminium-Papier-Verbundfolie für Lebensmittelbehälter, insbesondere für Grill- oder Menüschalen oder für Faltschachteln zur Aufbewahrung von Lebensmitteln, ein Verfahren zur Herstellung einer Aluminium-Papier-Verbundfolie, eine Verwendung der Aluminium-Papier-Verbundfolie und einen Lebensmittelbehälter.

Aus dem Stand der Technik sind Menüschalen aus Aluminium bekannt. Gegenüber anderen Materialien hat Aluminium den Vorteil guter Hitzebeständigkeit. Auf diese Weise können als Füllgut in der Menüschale enthaltene Lebensmittel in der Menüschale erwärmt werden, ohne dass dies die Menüschale beschädigt. Weiterhin ist Aluminium Fett- und Öl-undurchlässig, so dass kein Fett und Öl durch die Menüschalenwandung hindurchtritt und die Außenseite der Menüschale verunreinigt. Es ist aber bekannt, dass saure und salzhaltige Füllgüter mit der blanken Oberfläche von Aluminium reagieren und die Reaktionsprodukte migrieren können.

Vor diesem Hintergrund liegt der vorliegenden Erfindung die Aufgabe zugrunde, ein Produkt, ein Verfahren zu dessen Herstellung sowie dessen Verwendung zur Verfügung zu stellen, mit dem sich die oben genannten Probleme beheben lassen.

Diese Aufgabe wird erfindungsgemäß gelöst durch eine Aluminium-Papier-Verbundfolie für Lebensmittelbehälter mit einer Aluminiumfolienlage und mit einer Papierlage, wobei die Aluminiumfolienlage und die Papierlage durch eine dazwischen angeordnete Kleberlage miteinander verklebt sind. Auf diese Weise wird eine Aluminium-Papier-Verbundfolie bereitgestellt, die die Vorteile der Lebensmittelverträglichkeit der Papierlage mit der Hitzebeständigkeit sowie Öl- und Fettundurchlässigkeit der Aluminiumfolienlage miteinander verbindet. Darüber hinaus lässt sich die Aluminium-Papier-Verbundfolie einfach verarbeiten, insbesondere zu Grill- oder Menüschalen oder zu anderen Behältern wie Faltschachteln.

Durch das Verkleben der Aluminiumfolienlage und der Papierlage wird einerseits erreicht, dass die Aluminium-Papier-Verbundfolie die gute Formbarkeit, Stabilität und Reißbeständigkeit der Aluminiumfolienlage aufweist. Andererseits wird erreicht, dass die Neigung der Aluminiumfolienlage, bei einmal erfolgter Rissbildung immer weiter zu reißen, durch die damit verklebte Papierlage reduziert wird.

Weiterhin wird die oben genannte Aufgabe erfindungsgemäß gelöst durch die Verwendung der zuvor beschriebenen Aluminium-Papier-Verbundfolie zur Herstellung eines Lebensmittelbehälters, insbesondere einer Grill- oder Menüschale oder einer Faltschachtel zur Aufbewahrung von Lebensmitteln oder eines Faltschachtelzuschnitts dafür. Weiterhin wird die oben genannte Aufgabe erfindungsgemäß gelöst durch einen Lebensmittelbehälter, insbesondere eine Grill- oder Menüschale oder eine Faltschachtel zur Aufbewahrung von Lebensmitteln, oder einen Faltschachtelzuschnitt dafür, hergestellt aus der zuvor beschriebenen Aluminium-Papier-Verbundfolie. Der Lebensmittelbehälter kann insbesondere durch Stanzen und/oder Tiefziehen aus der Aluminium-Papier-Verbundfolie hergestellt werden.

Bei dem Lebensmittelbehälter ist die Papierlage auf der Innenseite angeordnet, d.h. auf der Seite, die für den Kontakt mit dem in dem Lebensmittelbehälter aufzubewahrenden Füllgut vorgesehen ist. Auf diese Weise wird ein direkter Kontakt des Füllguts mit dem Aluminium vermieden. Zudem verhindert die Trennschicht aus Trennwachs ein Anhaften des Füllguts an der Papierlage und erleichtert das Entnehmen des Füllguts.

Weiterhin wird die oben genannte Aufgabe erfindungsgemäß gelöst durch ein Verfahren zur Herstellung einer Aluminium-Papier-Verbundfolie, bei dem eine Aluminiumfolienlage und eine Papierlage bereitgestellt werden, bei dem auf die Aluminiumfolienlage und/oder auf die Papierlage eine Kleberlage aufgebracht wird und bei dem die Aluminiumfolienlage und die Papierlage mit dazwischen angeordneter Kleberlage zu einer Verbundfolie aufeinander gelegt werden. Mit diesem Verfahren lässt sich insbesondere die zuvor beschriebene Aluminium-Papier-Verbundfolie herstellen.

Die Papierlage und die Aluminiumfolienlage werden vorzugsweise bandförmig bereitgestellt, so dass eine kontinuierliche Produktion zu einem Aluminium-Papier-Verbundfolienband möglich ist.

Bei der Papierlage kann es sich insbesondere um eine Backpapierlage handeln. Entsprechend kann es sich bei der Aluminium-Papier-Verbundfolie insbesondere um eine Backverbundfolie handeln.

Bei dem Lebensmittelbehälter kann es sich insbesondere um eine Grill- oder Menüschale oder um eine Faltschachtel zur Aufbewahrung von Lebensmitteln handeln.

Nachfolgend werden verschiedene Ausführungsformen der Aluminium-Papier-Verbundfolie, deren Verwendung, des Lebensmittelbehälters und des Verfahrens beschrieben, wobei die einzelnen Ausführungsformen jeweils einzeln sowohl für die Aluminium-Papier-Verbundfolie, deren Verwendung, den Lebensmittelbehälter und das Verfahren gelten. Darüber hinaus können die beschriebenen Ausführungsformen auch untereinander kombiniert werden.

Die Aluminiumfolienlage weist eine Dicke im Bereich von 30 bis 150 µm, weiter bevorzugt 50 bis 80 µm auf. Auf diese Weise wird die für einen Lebensmittelbehälter erforderliche Steifigkeit erreicht.

Bei einer weiteren Ausführungsform ist die Papierlage silikonfrei. Weist die Papierlage eine Trennschicht auf, ist insbesondere auch diese silikonfrei.

Backpapier ist häufig mit Silikonlack beschichtet, um nach dem Backen das Ablösen des Backguts zu erleichtern. Die hohen Temperaturen im Backofen von z.B. 220°C können bei silikonisiertem Backpapier dazu führen, dass der Silikonlack teilweise verdampft. Neben den damit verbundenen gesundheitlichen Bedenken wurde bei modernen mit Sensoren ausgerüsteten Backöfen darüber hinaus als Problem erkannt, dass sich der verdampfende Silikonlack auf den Sensoren niederschlagen bzw. die Sensoren zusetzen kann, so dass die Sensoren in ihrer Funktionsweise beeinträchtigt werden.

US 2005/0013951 A1 offenbart eine Aluminium-Papier-Verbundfolie mit einer Aluminiumfolienlage und einer Papierlage, wobei die Papierlage mit Silikon beschichtet ist.

Durch die gezielte Verwendung einer silikonfreien Papierlage wird mit der beschriebenen Ausführungsform ein Produkt zur Verfügung gestellt, dass auch in modernen, mit Sensoren versehenen Backöfen ohne weiteres eingesetzt werden kann. Vorzugsweise ist die Aluminium-Papier-Verbundfolie silikonfrei. Insbesondere sind die einzelnen Bestandteile der Aluminium-Papier-Verbundfolie vorzugsweise silikonfrei. Für die Papierlage wird vorzugsweise entsprechend der zuvor beschriebenen Ausführungsform eine silikonfreie Papierlage, insbesondere eine silikonfreie Backpapierlage, verwendet. Insbesondere kann eine Papierlage ohne Silikonschicht, insbesondere Backpapierlage ohne Silikonschicht, verwendet werden. Weiterhin wird für die Kleberlage vorzugsweise ein silikonfreier Kleber verwendet. Wenn auf die Papierlage eine Trennlage aufgebracht ist, so ist auch diese vorzugsweise silikonfrei. Auf diese Weise wird eine insgesamt silikonfreie Aluminium-Papier-Verbundfolie zur Verfügung gestellt, die insbesondere für moderne, mit Sensoren ausgestattete Backöfen gut geeignet ist.

An der der Aluminiumfolienlage abgewandten Seite der Papierlage eine Trennschicht aus Trennwachs vorgesehen. Bei dem Verfahren der vorliegenden Erfindung wird die der Aluminiumfolienlage abgewandte Seite der Papierlage mit Trennwachs beschichtet, so dass sich auf der der Aluminiumfolienlage abgewandten Seite der Papierlage eine Trennschicht aus Trennwachs bildet. Das Beschichten der Papierlage mit Trennwachs erfolgt vorzugsweise nach dem Zusammenlegen von Aluminiumfolienlage und Papierlage mit dazwischen angeordneter Kleberlage zu einer Verbundfolie.

Durch das Vorsehen einer solchen Trennschicht aus Trennwachs wird zum einen erreicht, dass sich Füllgut in einen Lebensmittelbehälter aus der Aluminium-Papier-Verbundfolie nach einem Backen oder anderweitigen Erhitzen, zum Beispiel Grillen oder Kochen, besser von der Aluminium-Papier-Verbundfolie lösen lässt, und zwar auch bei Verzicht auf eine Beschichtung der Papierlage mit Silikonlack. Gleichzeitig hat eine Beschichtung mit Trennwachs den Vorteil gegenüber anderen Beschichtungen, dass es weder die Funktionsfähigkeit von Sensoren in einem Backofen beeinträchtigt, noch sich negativ auf den Geschmack oder Geruch des Füllguts auswirkt.

Indem die Trennschicht bei dem Verfahren auf der der Aluminiumfolienlage gegenüberliegenden Seite auf die Papierlage aufgebracht wird, kann trotz eines öl- bzw. fetthaltigen Trennwachses eine gute Klebeverbindung zwischen Aluminiumfolienlage und Papierlage erreicht werden. Die Verwendung von mit Trennwachs durchtränktem Papier, sogenanntem Ölpapier, würde demgegenüber zu einer schlechteren Haftung zwischen Aluminiumfolienlage und Papierlage führen.

Bei einer weiteren Ausführungsform umfasst die Trennschicht aus Trennwachs bzw. das zu deren Herstellung verwendete Trennwachs folgende Bestandteile: pflanzliche Öle und/oder Fette, Wachsester und ggf. Zusatzstoffe. Vorzugsweise besteht das Trennwachs im Wesentlichen, insbesondere zu mindestens 95 Gew.-% aus diesen Bestandteilen.

Bei den pflanzlichen Ölen und Fetten handelt es sich vorzugsweise um Palmöle und/oder Kokosöle bzw. Palmfette und/oder Kokosfette. Bei den Wachsestern handelt es sich vorzugsweise um Ester von Palmölsäuren, wie zum Beispiel Ölsäureester, Palmitinsäureester oder Linolsäureester, und/oder um Ester von Kokosöl-Säuren, wie zum Beispiel Laurinsäureester, Myristinsäureester, Palmitinsäureester, Ölsäureester oder Linolsäureester. Insbesondere kann es sich bei den Wachsestern auch um Ester von Säuren des Palmkernöls handeln.

Entsprechend wird bei einer Ausführungsform vorzugsweise ein Trennwachs aus Kokosöl, Palmöl und/oder Palmkernöl, Estern von Säuren dieser Öle sowie ggf. Zusatzstoffen verwendet.

Als Zusatzstoffe kommen insbesondere Emulgatoren und/oder Antioxidationsmittel in Betracht, insbesondere Fettsäureester der Ascorbinsäure oder Tocopherole (z.B. in Form von stark tocopherolhaltigen Extrakten).

In Backtests wurde festgestellt, dass mit der zuvor beschriebenen Zusammensetzung der Trennschicht eine Aluminium-Papier-Verbundfolie hergestellt werden kann, von der sich Füllgut nach dem Erwärmen, insbesondere Backgut nach dem Backen, in zufriedenstellender Weise lösen lässt und die zu keinen Geschmacks- oder Geruchseinbußen am Füllgut, insbesondere Backgut, führte.

Bei einer weiteren Ausführungsform der Aluminium-Papier-Verbundfolie ist an der der Papierlage abgewandten Seite der Aluminiumfolienlage eine außenseitige Trennschicht aus Trennwachs vorgesehen. Bei einer entsprechenden Ausführungsform des Verfahrens wird die der Papierlage abgewandte Seite der Aluminiumfolienlage mit Trennwachs beschichtet, so dass sich auf der der Papierlage abgewandten Seite der Aluminiumfolienlage eine Trennschicht aus Trennwachs bildet. Das Beschichten der Aluminiumfolienlage mit Trennwachs erfolgt vorzugsweise nach dem Zusammenlegen von Aluminiumfolienlage und Papierlage mit dazwischen angeordneter Kleberlage zu einer Verbundfolie.

Die außenseitige Trennschicht wird vorliegend als "außenseitig" bezeichnet, da sie an der Aluminiumfolienlage vorgesehen ist, die bei dem aus der Aluminium-Papier-Verbundfolie herstellbaren Lebensmittelbehälter auf der Außenseite, d.h. auf der dem Füllgut abgewandten Seite, angeordnet ist.

Das Vorsehen einer solchen außenseitigen Trennschicht aus Trennwachs erleichtert die Herstellung von Lebensmittelbehältern aus der Aluminium-Papier-Verbundfolie, insbesondere wenn die Herstellung mittels Stanzen und/oder Tiefziehen aus der Aluminium-Papier-Verbundfolie erfolgt. Durch die außenseitige Trennschicht wird verhindert, dass die Aluminium-Papier-Verbundfolie mit der Aluminiumfolie am Stanzwerkzeug anhaftet. Dadurch lässt sich der Lebensmittelbehälter oder dessen gestanztes Vorprodukt leichter aus dem Stanzwerkzeug lösen. Entsprechend wird die Aluminium-Papier-Verbundfolie vorzugsweise zur Herstellung eines Lebensmittelbehälters mittels Stanzen und/oder Tiefziehen verwendet.

Bei einer weiteren Ausführungsform umfasst die außenseitige Trennschicht aus Trennwachs bzw. das zu deren Herstellung verwendete Trennwachs folgende Bestandteile: pflanzliche Öle und/oder Fette, Wachsester und ggf. Zusatzstoffe. Vorzugsweise besteht das Trennwachs im Wesentlichen, insbesondere zu mindestens 95 Gew.-% aus diesen Bestandteilen. Insbesondere kann für die außenseitige Trennschicht ein Trennwachs verwendet werden, wie es zuvor für die an der der Aluminiumfolienlage abgewandten Seite der Papierlage vorsehbare Trennschicht beschrieben ist. Weist die Aluminium-Papier-Verbundfolie sowohl eine Trennschicht an der der Aluminiumfolienlage abgewandten Seite der Papierlage als auch eine außenseitige Trennschicht auf, so können diese insbesondere aus dem gleichen Trennwachs bestehen, wodurch die Herstellung der Aluminium-Papier-Verbundfolie vereinfacht wird.

Bei einer weiteren Ausführungsform ist die Papierlage fettabweisend. Zu diesem Zweck kann die Papierlage insbesondere einen Zusatzstoff wie zum Beispiel Polyvinylalkohole aufweisen. Insbesondere kann die Papierlage durch ein Verfahren hergestellt sein, bei dem eine Pulpe mit gemahlenen Zellulosefasern mit einem die fettabweisende Eigenschaft des herzustellenden Papiers, insbesondere Backpapiers, bewirkenden Zusatzstoff, wie zum Beispiel Polyvinylalkohole, versehen wird und bei dem das Papier aus der Pulpe gewonnen wird. Auf diese Weise wird eine gleichmäßige Verteilung des Zusatzstoffs im Papier erreicht, so dass dieses gleichmäßig fettabweisende Eigenschaften aufweist.

Durch die fettabweisende Eigenschaft der Papierlage wird insbesondere erreicht, dass ein auf die Papierlage aufgebrachtes Trennwachs eine gleichmäßige dünne Trennschicht ausbildet, ohne dass die Papierlage das Trennwachs aufsaugt.

Bei einer weiteren Ausführungsform ist die Papierlage nassfest. Zu diesem Zweck kann die Papierlage insbesondere einen Zusatzstoff wie zum Beispiel Polyalkylenamine aufweisen. Auf diese Weise kann ein unerwünschtes Zerreißen der Papierlage bei Kontakt mit wässrigem Füllgut verhindert werden.

Bei einer weiteren Ausführungsform besteht die Klebelage aus einem hitzebeständigen Kleber. Vorzugsweise ist der Kleber mindestens bis 220 °C hitzebeständig, so dass sich die Aluminiumfolienlage und die Papierlage während eines Backvorgangs oder eines anderen Erwärmungs- bzw. Garvorgangs nicht voneinander lösen. Vorzugsweise wird ein wasserbasierter Kleber verwendet, insbesondere ein wasserbasierter Emulsionsklebstoff. Als besonders vorteilhaft für die Lebensmitteltauglichkeit der Aluminium-Papier-Verbundfolie hat sich ein Casein/Latex-Emulsionsklebstoff herausgestellt.

Bei einer weiteren Ausführungsform weist die Papierlage eine Grammatur (Flächengewicht) im Bereich von 20 bis 25 g/m² oder 25 bis 100 g/m², vorzugsweise 20 - 80 g/m², insbesondere 25 bis 80 g/m², auf.

Bei einer weiteren Ausführungsform besteht die Aluminiumfolienlage aus einer Aluminiumlegierung vom Typ EN AW 12xx, insbesondere EN AW 1200, vom Typ EN AW 3003 oder 3005 oder vom Typ EN AW 8006, 8011 oder 8079. Die Dicke der Aluminiumfolienlage liegt im Bereich von 30 µm bis 150µm, bevorzugt im Bereich 50 µm bis 80 µm. Dies führt zu besonders geeigneten mechanischen Eigenschaften für die Aluminium-Papier-Verbundfolie. Weiterhin wird vorzugsweise eine Aluminiumfolienlage im weichgeglühten Zustand (Zustand O nach EN 515) bis zum halbharten Zustand (Zustand H22 oder H24) verwendet, wodurch die Verarbeitbarkeit der Aluminium-Papier-Verbundfolie verbessert wird.

Bei einer weiteren Ausführungsform werden die Aluminiumfolienlage und die Papierlage mit der dazwischen angeordneten Kleberlage aneinandergepresst. Vorzugsweise werden die Aluminiumfolienlage und die Papierlage mit der dazwischen angeordneten Kleberlage durch zwei gegenüberliegende Anpresswalzen geführt. Auf diese Weise haften die Aluminiumfolienlage und die Papierlage durch die Kleberlage zuverlässig und flächig, insbesondere vollflächig, aufeinander.

Bei einer weiteren Ausführungsform des Verfahrens wird die Verbundfolie getrocknet, beispielsweise in einem Durchlaufofen. Vorzugsweise erfolgt das Trocknen nach einem vorherigen Aneinanderpressen von Aluminiumfolienlage, Papierlage und dazwischen angeordnetem Kleber.

Eine Beschichtung der Papierlage mit Trennwachs erfolgt vorzugsweise nach einem etwaigen Aneinanderpressen von Aluminiumfolienlage, Papierlage und dazwischen angeordneter Kleberlage. Auf diese Weise wird durch das Aneinanderpressen zunächst ein guter Zusammenhalt von Aluminiumfolienlage und Papierlage durch die Kleberlage erreicht, bevor das Trennwachs aufgebracht wird. Ein etwaiger negativer Einfluss des Trennwachses, beispielsweise von darin enthaltenen Ölen bzw. Fetten, auf die Klebeverbindung durch die Kleberlage wird dadurch reduziert oder sogar verhindert.

Weiterhin erfolgt eine Beschichtung der Papierlage mit Trennwachs vorzugsweise vor einem etwaigen Trocknen der Verbundfolie. Auf diese Weise kann beim Trocknen auch die Trennschicht aus Trennwachs getrocknet werden, so dass ggf. Wasseranteile im Trennwachs verdampfen können.

Die fertige Aluminium-Papier-Verbundfolie kann schließlich, zum Beispiel nach dem Trocknen, zu einer Rolle aufgewickelt werden.

Weitere Vorteile und Merkmale der Aluminium-Papier-Verbundfolie, des Verfahrens, der Verwendung und des Lebensmittelbehälters ergeben sich aus der nachfolgenden Beschreibung von Ausführungsbeispielen, wobei auf die beigefügte Zeichnung Bezug genommen wird.

In der Zeichnung zeigen
- Fig. 1: ein erstes Ausführungsbeispiel der Aluminium-Papier-Verbundfolie,
- Fig. 2: ein Ausführungsbeispiel des Verfahrens,
- Fig. 3: ein zweites Ausführungsbeispiel der Aluminium-Papier-Verbundfolie,
- Fig. 4: ein weiteres Ausführungsbeispiel des Verfahrens,
- Fig. 5: ein Ausführungsbeispiel der Verwendung und des Lebensmittelbehälters,
- Fig. 6: ein Ausführungsbeispiel der Verwendung des Lebensmittelbehälters und
- Fig. 7a-b: ein weiteres Ausführungsbeispiel der Verwendung und des Lebensmittelbehälters.

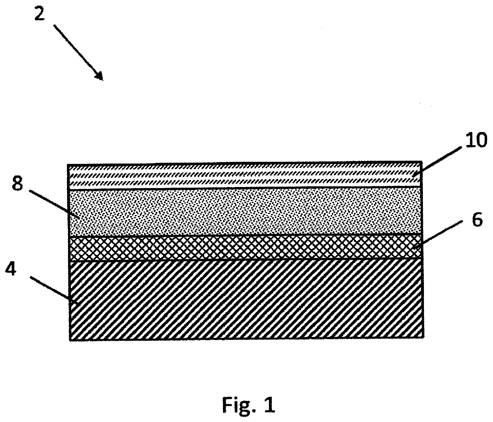

Figur 1 zeigt den Lagenaufbau eines Ausführungsbeispiels der Aluminium-Papier-Verbundfolie in schematischer Querschnittsansicht. Die Aluminium-Papier-Verbundfolie 2 umfasst eine Aluminiumfolienlage 4, eine darauf aufgebracht Kleberlage 6, eine wiederum darauf aufgebrachte Papierlage 8, insbesondere eine Backpapierlage, sowie eine wiederum darauf aufgebrachte Trennschicht 10 aus Trennwachs. Die Aluminiumfolienlage 4 besteht aus einer Aluminiumlegierung vom Typ EN AW 1200, weist eine Dicke von 50 µm auf und befindet sich im weichgeglühten Zustand. Die Kleberlage 6 besteht aus einem Casein-Latex-Emulsionsklebstoff. Die Papierlage 8 besteht im Wesentlichen aus gemahlenen Zellulosefasern sowie Zusatzstoffen, wie zum Beispiel Polyvinylalkoholen und Polyalkylenaminen, die die Papierlage 8 fettabweisend bzw. nassfest machen. Die Papierlage 8 ist silikonfrei und weist insbesondere keine silikonhaltige Beschichtung auf. Die Trennschicht 10 besteht aus einem Trennwachs aus einer Mischung von Kokos- und Palmöl bzw. Palmkernöl sowie deren Estern. Weiterhin weist das Trennwachs der Trennschicht 10 Zusatzstoffe, nämlich Ascorbinsäureester und Tocopherol, als Emulgatoren und Antioxidationsmittel auf. Die Trennschicht 10 ist wie die Papierlage 8 silikonfrei.

Durch diesen Aufbau der Aluminium-Papier-Verbundfolie 2 wird ein Produkt zur Verfügung gestellt, dass sich einfach zu Lebensmittelbehältern weiterverarbeiten lässt, aufgrund des Verzichts auf Silikon gesundheitsunbedenklich ist und auch in modernen Backöfen mit Sensoren im Backraum eingesetzt werden kann.

Bei der Herstellung von Lebensmittelbehältern aus der Aluminium-Papier-Verbundfolie 2 wird die mit der Trennschicht 10 versehene Papierlage 8 innenseitig und die Aluminiumfolienlage 4 außenseitig angeordnet. Die Papierlage 8 bildet somit die Innenseite des Lebensmittelbehälters. In den Lebensmittelbehälter gefülltes Füllgut kommt somit nicht direkt mit der Aluminiumfolienlage 4 in Kontakt. Die Trennschicht 10 sorgt für ein zufriedenstellendes Ablösen des Füllguts von der Papierlage 8, zum Beispiel nach einem nach einem Erwärmungs- oder Garvorgang, wie zum Beispiel einem Back- oder Grillvorgang.

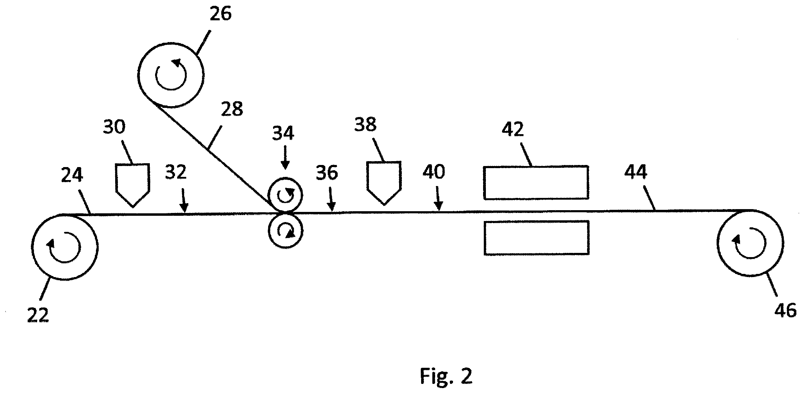

Figur 2 zeigt in schematischer Darstellung ein Ausführungsbeispiel eines Verfahrens zur Herstellung einer Aluminium-Papier-Verbundfolie, insbesondere der Aluminium-Papier-Verbundfolie 2 aus Figur 1, in Bandform. Bei dem Verfahren werden zunächst eine Rolle 22 mit Aluminiumfolie 24 (EN AW 1200, 12 µm Dicke, weichgeglüht) sowie eine Rolle 26 mit einer silikonfreien Papierlage 28, beispielsweise eine Backpapierlage, bereitgestellt. Auf die Aluminiumfolienlage 24 wird mittels einer Auftragseinheit 30 eine Kleberlage 32, insbesondere aus einem Casein/Latex-Emulsionskleber, aufgebracht. Mittels Anpressrollen 34 werden die Aluminiumfolienlage 24, die Papierlage 28 und die dazwischen angeordnete Kleberlage 32 zu einer Verbundfolie 36 aufeinander gelegt und aneinandergepresst. Nach dem Zusammenpressen wird die der Aluminiumfolienlage 24 abgewandte Seite der Papierlage 28 mittels einer weiteren Auftragseinheit 38 mit einer Trennschicht 40 aus Trennwachs beschichtet. Anschließend wird die Verbundfolie 36 zum Trocknen durch einen Durchlaufofen 42 gefahren, wobei einerseits die die Aluminiumfolienlage 24 und die Papierlage 28 verbindende Kleberlage 32 aushärtet und ein etwaiger Wasseranteil in der Trennschicht 40 verdampft. Die fertige Aluminium-Papier-Verbundfolie 44 wird dann zu einer Rolle 46 aufgewickelt.

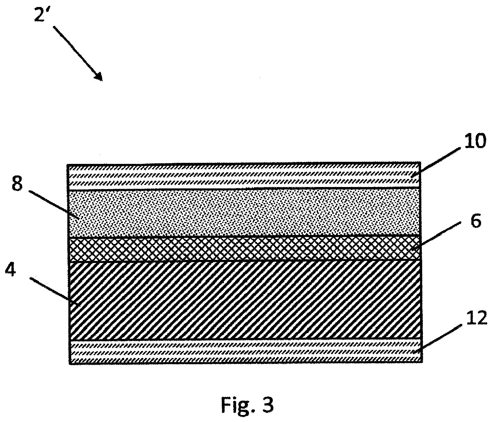

Figur 3 zeigt den Lagenaufbau eines weiteren Ausführungsbeispiels der Aluminium-Papier-Verbundfolie in schematischer Querschnittsansicht. Die Aluminium-Papier-Verbundfolie 2' weist einen ähnlichen Aufbau auf wie die Aluminium-Papier-Verbundfolie 2 aus Fig. 1 und unterscheidet sich von dieser lediglich durch eine auf der der Papierlage 8 abgewandten Seite der Aluminiumlage 4 aufgebrachte außenseitige Trennschicht 12 aus Trennwachs. Die außenseitige Trennschicht 12 weist dieselbe Zusammensetzung auf wie die Trennschicht 10.

Die außenseitige Trennschicht 12 erleichtert die Herstellung von Lebensmittelbehältern aus der Aluminium-Papier-Verbundfolie 2', da die außenseitige Trennschicht 12 ein Anhaften der Aluminiumfolienlage 4 an einem Werkzeug, insbesondere Stanz- oder Tiefziehwerkzeug, verhindert.

Lebensmittelbehälter können insbesondere durch Stanzen und/oder Tiefziehen aus der Aluminium-Papier-Verbundfolie 2' hergestellt werden. Insbesondere kann ein Zuschnitt aus der Aluminium-Papier-Verbundfolie 2' ausgestanzt und dann zu einer Grill- oder Menüschale tiefgezogen werden. Weiterhin können Faltschachteln aus der Aluminium-Papier-Verbundfolie 2' hergestellt werden, indem Faltschachtel-Zuschnitte aus der Aluminium-Papier-Verbundfolie 2' ausgestanzt werden. Das Falten der Faltschachtel-Zuschnitte zur Faltschachtel kann dann im Anschluss oder auch erst zu einem späteren Zeitpunkt, zum Beispiel bei einem Abnehmer der Faltschachtel-Zuschnitte oder unmittelbar vor dem Befüllen mit Füllgut erfolgen.

Beim Stanzen bzw. Tiefziehen treten typischerweise große Kräfte auf, mit denen die Aluminium-Papier-Verbundfolie 2' gegen das Stanz- bzw. Tiefziehwerkzeug gedrückt wird. Die außenseitige Trennschicht 12 verhindert in diesem Fall, dass die Aluminium-Papier-Verbundfolie 2' mit der Aluminiumfolienlage 4 am Stanz- bzw. Tiefziehwerkzeug haftet.

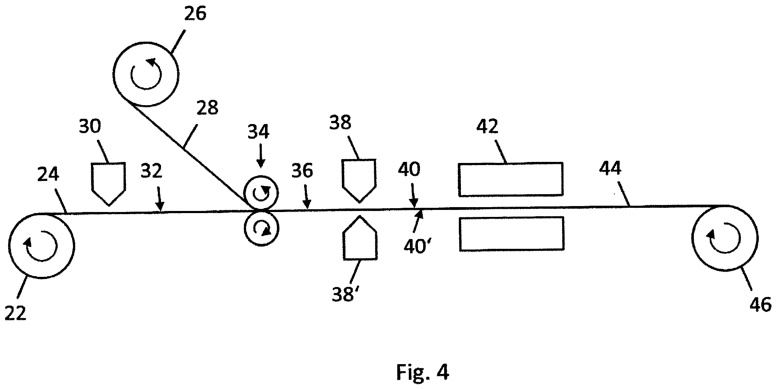

Figur 4 zeigt in schematischer Darstellung ein weiteres Ausführungsbeispiel eines Verfahrens zur Herstellung einer Aluminium-Papier-Verbundfolie, insbesondere der Aluminium-Papier-Verbundfolie 2` aus Figur 3. Das in Figur 4 dargestellte Verfahren stimmt im Wesentlichen mit dem in Figur 2 dargestellten Verfahren überein. Gleiche Komponenten sind jeweils mit gleichen Bezugszeichen versehen. Zusätzlich zu dem Verfahren aus Figur 2 wird bei dem Verfahren aus Figur 4 die der Papierlage 28 abgewandte Seite der Aluminiumfolienlage 24 nach dem Verpressen und vor dem Trocknen mittels einer weiteren Auftragseinheit 38' mit einer außenseitigen Trennschicht 40' aus Trennwachs beschichtet.

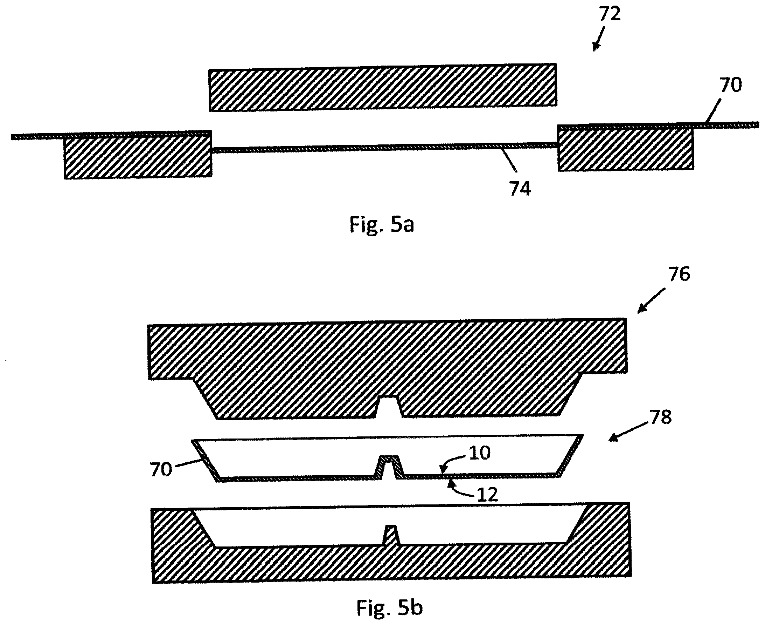

Die Figuren 5a-b zeigen in schematischer Darstellung (Schnittansicht) ein Ausführungsbeispiel der Verwendung einer Aluminium-Papier-Verbundfolie 70 zur Herstellung eines Lebensmittelbehälters in Form einer Menüschale. Die Aluminium-Papier-Verbundfolie 70 weist einen Aufbau wie die Aluminium-Papier-Verbundfolie 2 aus Fig. 1 oder wie die Aluminium-Papier-Verbundfolie 2' aus Fig. 3 auf.

In einem ersten in Fig. 5a dargestellten Schritt wird aus der Aluminium-Papier-Verbundfolie 70 mit einem Stanzwerkzeug 72 ein Zuschnitt 74 ausgestanzt. Fig. 5a zeigt die Situation nach dem Austanzen. Der Zuschnitt 74 wird dann in dem in Fig. 5b dargestellten Schritt in einem Tiefziehwerkzeug 76 angeordnet und zu der Menüschale 78 tiefgezogen. Die Papierlage der Aluminium-Papier-Verbundfolie 70 ist auf der Innenseite und die Aluminiumfolienlage der Aluminium-Papier-Verbundfolie 70 ist auf der Außenseite der Menüschale 78 angeordnet.

Bevorzugt weist ist die Aluminium-Papier-Verbundfolie 70 einen Aufbau wie die Aluminium-Papier-Verbundfolie 2'aus Fig. 3 mit einer Trennschicht 10 und einer außenseitigen Trennschicht 12 auf. Durch die Trennschichten 10, 12 haftet die Aluminium-Papier-Verbundfolie 70 nicht am Stanz- bzw. Tiefziehwerkzeug und lässt sich dadurch leichter verarbeiten.

Das in den Fig. 5a-b dargestellte Verfahren kann grundsätzlich auch einschrittig durchgeführt werden.

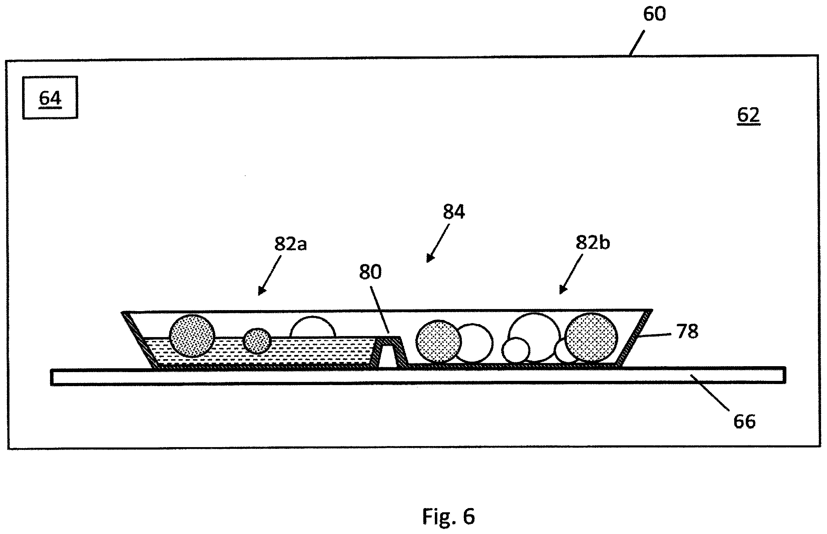

Figur 6 zeigt in schematischer Darstellung eine mögliche Verwendung der Menüschale 78 aus Fig. 5b. Die Menüschale 78 (in Fig. 6 in schematischer Schnittansicht dargestellt) kann mit Lebensmitteln als Füllgut befüllt werden. Im vorliegenden Beispiel weist die Menüschale zwei durch eine Sicke 80 voneinander getrennte Bereiche 82a-b auf, in denen verschiedenes Füllgut 84 (z.B. Klöße mit Soße in Bereich 82a und Kartoffeln in Bereich 82b) enthalten ist.

Das Füllgut 84 kann in der Menüschale 78 erwärmt werden. Figur 6 zeigt hierzu einen Backofen 60 mit einem beheizbaren Backraum 62, in dem ein Sensor 64 angeordnet ist, wie zum Beispiel bei Backöfen der Marke Siemens von der BSH Gruppe, die mit der Funktion "cookControl" ausgestattet sind.

Zur Durchführung eines Aufwärm- oder Garvorgangs wird die Menüschale 78 in den Backraum 62 gestellt, beispielsweise auf ein Backblech oder Rost 66.

Während des Backvorgangs wird der Backraum 62 auf eine Temperatur von beispielsweise 220 °C aufgeheizt. Durch diese Temperaturen kann es zwar zu einem teilweisen Aufschmelzen der Trennschicht 10 und (falls vorhanden) der äußeren Trennschicht 12 und ggf. auch zu einem partiellen Verdampfen des Trennwachses kommen. Anders als bei silikonbeschichtetem Backpapier führt dies jedoch nicht zu einer Beeinträchtigung oder Beschädigung des Sensors 64.

Weiterhin hat sich gezeigt, dass sich das Füllgut 84 nach dem Aufwärm- oder Garvorgang dank der Trennschicht 10 der Menüschale 78 trotz fehlender Silikonlackschicht in zufriedenstellender Weise von der Menüschale 78 ablösen lässt.

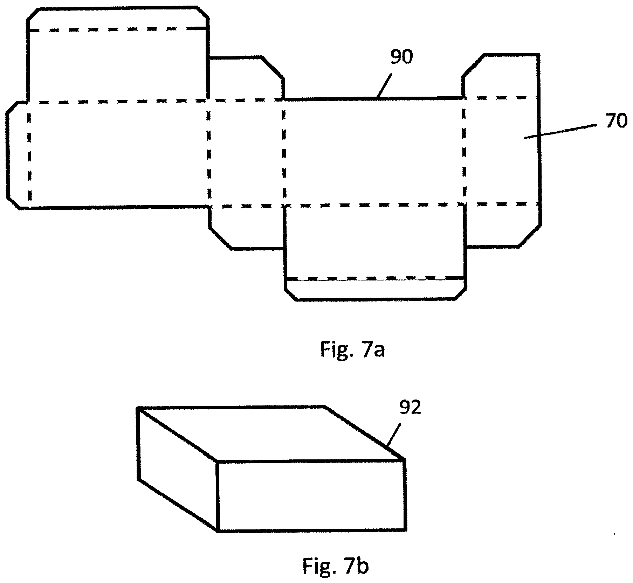

Die Figuren 7a-b zeigen ein weiteres Ausführungsbeispiel der Verwendung und des Lebensmittelbehälters. Fig. 7a zeigt einen aus der Aluminium-Papier-Verbundfolie 70 ausgestanzten Faltkartonzuschnitt 90 und Fig. 7b einen aus dem Faltkartonzuschnitt 90 faltbaren Faltkarton 92 für Lebensmittel in schematischer perspektivischer Darstellung. Durch die Trennschicht 10 und die außenseitige Trennschicht 12 der Aluminium-Papier-Verbundfolie 70 lässt sich der Faltkartonzuschnitt 90 nach dem Stanzen einfach aus dem Stanzwerkzeug entfernen, da durch die Trennschichten 10, 12 ein Festkleben an dem Stanzwerkzeug vermieden wird. Der Faltkarton 92 weist auf der Innenseite die Papierlage 8 mit der Trennschicht 10 auf, so dass ein direkter Kontakt von in dem Faltkarton 92 eingefülltem Lebensmittel und Aluminiumlage 4 vermieden wird.

Es wurden Versuche durchgeführt, die die Vorteile der zuvor beschriebenen Aluminium-Papier-Verbundfolien zeigen. Diese werden im Folgenden erläutert:
Zunächst wurden verschiedene Aluminium-Papier-Verbundfolien hergestellt, indem jeweils auf weichgeglühte Aluminiumfolie aus einer Aluminiumlegierung vom Typ EN AW 1200 eine Kleberschicht aus Casein/Latex-Emulsionskleber aufgebracht und dann jeweils als Papierlage ein Backpapier aufgelegt wurde. Die sich dadurch ergebende Verbundfolie wurde zunächst durch Anpressrollen geführt, um die Aluminiumfolie, das Backpapier und die dazwischen liegende Kleberschicht aneinander zu pressen, dann bei einigen Versuchen auf der Backpapier-Seite beschichtet und schließlich in einem Durchlaufofen getrocknet. Aus den fertigen Backverbundfolien wurden dann einzelne Bögen ausgeschnitten.

Die Aluminiumfolienlage und die Kleberlage waren bei allen Aluminium-Papier-Verbundfolien identisch. Der weitere Aufbau der Aluminium-Papier-Verbundfolien ist der nachfolgenden Tabelle 1 zu entnehmen.

Die erste Spalte der Tabelle 1 gibt die Bezeichnung der jeweiligen Aluminium-Papier-Verbundfolie für die Versuche an (A - J). Die zweite und dritte Spalte geben das für die Papierlage verwendete Backpapier an. Um ein aussagekräftiges Ergebnis zu erreichen, wurden am Markt verfügbare Backpapiere von verschiedenen Herstellern getestet (in Tabelle 1 als Hersteller 1 - 4 bezeichnet). Das Backpapier des Herstellers 2 ist sowohl silikonisiert (d.h. mit Silikonlackbeschichtung) als auch silikonfrei erhältlich. Die dritte Spalte gibt an, ob für die jeweilige Aluminium-Papier-Verbundfolie ein silikonisiertes oder ein silikonfreies Backpapier verwendet wurde. Die letzte Spalte gibt an, ob eine Trennschicht aufgebracht wurde und welches Material hierfür verwendet wurde. Bei den Aluminium-Papier-Verbundfolien F bis H wurde für die Trennschicht jeweils ein für Lebensmittel zugelassenes Trennwachs aus Palmöl, Kokosnussöl, Wachsestern von Palmkernsäuren und Kokosnussölsäuren sowie als Zusatzstoffe Fettsäureestern der Ascorbinsäure und stark tocopherolhaltigen Extrakten verwendet. Bei den Aluminium-Papier-Verbundfolien I und J wurde für die Trennschicht jeweils eine für Lebensmittel zugelassene wasserbasierte Acrylatdispersion verwendet.

**Tabelle 1**

| | **Papierlage** | **silikonisiert** | **Trennschicht** |
|---|---|---|---|
| A | Backpapier Hersteller 1 | ja | nein |
| B | Backpapier Hersteller 2 | ja | nein |
| C | Backpapier Hersteller 2 | nein | nein |
| D | Backpapier Hersteller 3 | nein | nein |
| E | Backpapier Hersteller 4 | nein | nein |
| F | Backpapier Hersteller 2 | nein | Trennwachs |
| G | Backpapier Hersteller 3 | nein | Trennwachs |
| H | Backpapier Hersteller 4 | nein | Trennwachs |
| I | Backpapier Hersteller 2 | nein | Acrylatlack |
| J | Backpapier Hersteller 3 | nein | Acrylatlack |

Mit den Bögen aus Aluminium-Papier-Verbundfolie vom Typ A - J wurden jeweils verschiedene Gar- bzw. Backvorgänge mit unterschiedlichem Füll- bzw. Backgut durchgeführt, und zwar jeweils mit Backbrötchen, Croissants und Laugenbrezeln. Zu diesem Zweck wurde jeweils ein Aluminium-Papier-Verbundfolien-Bogen auf einem konventionellen Backblech angeordnet, das jeweilige Backgut auf den Aluminium-Papier-Verbundfolien-Bogen gegeben und der Backvorgang in einem konventionellen Backofen entsprechend der Angaben des Herstellers des jeweiligen Backguts durchgeführt (insb. mit der vorgegebenen Backzeit und der vorgegebenen Backtemperatur). Nach dem jeweiligen Backvorgang wurden die Geruchsentwicklung im Backofen sowie die Ablösbarkeit des fertig gebackenen Füll- bzw. Backguts vom jeweiligen Aluminium-Papier-Verbundfolien-Bogen überprüft.

Die Ergebnisse der Gar- bzw. Backversuche sind in der nachfolgenden Tabelle 2 zusammengefasst:

**Tabelle 2**

| Aluminium-Papier-**Verbundfolie** | **Eignung für sensorgestützte Backöfen¹** | **Ablösbarkeit des Backguts²** | | | **Geruchsentwicklung⁶** |
|---|---|---|---|---|---|
| | | **B³** | **C⁴** | **L⁵** | |
| A | nein | ++ | ++ | ++ | + |
| B | nein | ++ | ++ | ++ | + |
| C | ja | ++ | o | - | + |
| D | ja | ++ | ++ | - | + |
| E | ja | ++ | - | - | + |
| F | ja | ++ | + | - | + |
| G | ja | ++ | ++ | + | + |
| H | ja | ++ | + | - | + |
| I | ja | ++ | o | - | - |
| J | ja | ++ | o | - | - |
| ¹keine Eignung für sensorgestützte Backöfen bei silikonisierten Backpapierfolien | | | | | |
| ²++: keine Anhaftungen, +: leichte Anhaftungen, o: mittlere Anhaftungen, -: starke Anhaftungen | | | | | |
| ³B: Backbrötchen, ⁴C: Croissants, ⁵L: Laugenbrezel | | | | | |
| ⁶+: kein störender Geruch nach dem Backvorgang; -: störende Geruchsentwicklung | | | | | |

Die Versuche zeigen, dass die Aluminium-Papier-Verbundfolien A und B mit silikonisierten Papierlagen (Hersteller 1, 2) wie erwartet gute Ergebnisse bei der Ablösbarkeit des Backguts zeigen. Allerdings sind silikonisierte Papierlagen für moderne sensorgestützte Backöfen nicht gut geeignet, da die beim Backvorgang verdampfenden Silikone die Sensoren dieser Backöfen beeinträchtigen oder beschädigen können.

Die Aluminium-Papier-Verbundfolien C bis E mit silikonfreien Papierlagen verschiedener Hersteller (2, 3, 4) ohne Trennschicht zeigen für Backbrötchen sehr gute, für Croissants unterschiedliche und für Laugenbrezel weniger gute Ergebnisse. Diese Aluminium-Papier-Verbundfolien sind damit zumindest bedingt für aufwärmbare Lebensmittelbehälter geeignet, wenn auch nicht für alle Füllgute.

Die Aluminium-Papier-Verbundfolien F bis H mit silikonfreien Papierlagen verschiedener Hersteller (2, 3, 4) mit Trennwachs-Trennschicht zeigen im direkten Vergleich zu den entsprechenden Aluminium-Papier-Verbundfolien C bis E ohne Trennwachs-Trennschicht verbesserte Ergebnisse beim Ablösen des Backguts. So zeigt Aluminium-Papier-Verbundfolie F bessere Ergebnisse als Aluminium-Papier-Verbundfolie C (Backpapier Hersteller 2), Aluminium-Papier-Verbundfolie G zeigt bessere Ergebnisse als Aluminium-Papier-Verbundfolie D (Backpapier Hersteller 3) und Aluminium-Papier-Verbundfolie H zeigt bessere Ergebnisse als Aluminium-Papier-Verbundfolie E (Backpapier Hersteller 4). Die Versuchsergebnisse bestätigen damit, dass das Vorsehen einer Trennwachs-Trennschicht eine zufriedenstellendere Ablösbarkeit des Backguts bewirkt, so dass die Aluminium-Papier-Verbundfolien mit Trennschicht jeweils besser für Lebensmittelbehälter geeignet sind als ihre jeweiligen Pendants ohne Trennschicht.

Die Aluminium-Papier-Verbundfolien I und J mit Acrylat-Trennschicht zeigten bei der Ablösbarkeit schlechtere Ergebnisse als die Aluminium-Papier-Verbundfolien mit Trennwachs-Trennschicht. Zudem führten die Aluminium-Papier-Verbundfolien I und J zu einer unangenehmen Geruchsentwicklung während des Gar- bzw. Backvorgangs.

## Patentansprüche

1. Aluminium-Papier-Verbundfolie (2, 44) für Lebensmittelbehälter, insbesondere hergestellt mit einem Verfahren nach einem der Ansprüche 11 bis 15,
- mit einer Aluminiumfolienlage (4, 24) und
- mit einer Papierlage (8, 28),
- wobei die Aluminiumfolienlage (4, 24) und die Papierlage (8, 28) durch eine dazwischen angeordneten Kleberlage (6, 32) miteinander verklebt sind,
**dadurch gekennzeichnet,**
- **dass** die Aluminiumfolienlage eine Dicke im Bereich von 30 bis 150 µm aufweist und
- **dass** die der Aluminiumfolienlage (4, 24) abgewandte Seite der Papierlage (8, 28) mit einer Trennschicht (10, 40) aus Trennwachs beschichtet ist.

2. Aluminium-Papier-Verbundfolie nach Anspruch 1,
**dadurch gekennzeichnet, dass** die Papierlage (8, 28) silikonfrei ist.

3. Aluminium-Papier-Verbundfolie nach Anspruch 1 oder 2,
**dadurch gekennzeichnet, dass** an der der Papierlage abgewandten Seite der Aluminiumlage eine außenseitige Trennschicht aus Trennwachs vorgesehen ist.

4. Aluminium-Papier-Verbundfolie nach einem der Ansprüche 1 bis 3,
**dadurch gekennzeichnet, dass** die Trennschicht (10, 40) aus Trennwachs und/oder die außenseitige Trennschicht (12, 40') aus Trennwachs folgende Bestandteile umfasst, insbesondere zu mindestens 95 Gew.-% aus diesen Bestandteilen besteht: pflanzliche Öle und/oder pflanzliche Fette, Wachsester und ggf. Zusatzstoffe.

5. Aluminium-Papier-Verbundfolie nach einem der Ansprüche 1 bis 4,
**dadurch gekennzeichnet, dass** die Papierlage (8, 28) fettabweisend ist.

6. Aluminium-Papier-Verbundfolie nach einem der Ansprüche 1 bis 5,
**dadurch gekennzeichnet, dass** die Papierlage (8, 28) nassfest ist.

7. Aluminium-Papier-Verbundfolie nach einem der Ansprüche 1 bis 6,
**dadurch gekennzeichnet, dass** die Kleberlage (6, 32) aus einem hitzebeständigen Kleber besteht, vorzugsweise aus einem wasserbasierten Emulsionsklebstoff, insbesondere aus einem Casein/Latex-Emulsionsklebstoff.

8. Aluminium-Papier-Verbundfolie nach einem der Ansprüche 1 bis 7,
**dadurch gekennzeichnet, dass** die Papierlage ein Flächengewicht im Bereich 20 - 80 g/m² aufweist.

9. Verwendung einer Aluminium-Papier-Verbundfolie nach einem der Ansprüche 1 bis 8 zur Herstellung eines Lebensmittelbehälters, insbesondere einer Grill- oder Menüschale oder einer Faltschachtel zur Aufbewahrung von Lebensmitteln oder eines Faltschachtelzuschnitts dafür.

10. Lebensmittelbehälter, insbesondere Grill- oder Menüschale oder Faltschachtel zur Aufbewahrung von Lebensmitteln, oder Faltschachtelzuschnitt dafür, hergestellt aus einer Aluminium-Papier-Verbundfolie nach einem der Ansprüche 1 bis 8.

11. Verfahren zur Herstellung einer Aluminium-Papier-Verbundfolie (2, 44), insbesondere einer Aluminium-Papier-Verbundfolie nach einem der Ansprüche 1 bis 8,
- bei dem eine Aluminiumfolienlage (4, 24) mit einer Dicke im Bereich von 30 - 150 µm und eine Papierlage (8, 28) bereitgestellt werden,
- bei dem auf die Aluminiumfolienlage (4, 24) und/oder auf die Papierlage (8, 28) eine Kleberlage (6, 32) aufgebracht wird,
- bei dem die Aluminiumfolienlage (4, 24) und die Papierlage (8, 28) mit dazwischen angeordneter Kleberlage (6, 32) zu einer Verbundfolie (36) aufeinander gelegt werden und
- wobei die der Aluminiumfolienlage (4, 24) abgewandte Seite der Papierlage (8, 28) mit einer Trennschicht (10, 40) aus Trennwachs beschichtet ist oder beschichtet wird.

12. Verfahren nach Anspruch 11,
**dadurch gekennzeichnet, dass** die Papierlage (8, 28) silikonfrei ist.

13. Verfahren nach Anspruch 11 oder 12,
bei dem die der Papierlage (4, 24) abgewandte Seite der Aluminiumfolienlage (8, 28) mit einer außenseitigen Trennschicht (12, 40') aus Trennwachs beschichtet wird.

14. Verfahren nach einem der Ansprüche 11 bis 13,
bei dem die Aluminiumfolienlage (4, 24) und die Papierlage (8, 28) mit der dazwischen angeordneten Kleberlage (6, 32) aneinandergepresst werden.

15. Verfahren nach einem der Ansprüche 11 bis 14,
bei dem die Verbundfolie (36) getrocknet wird.

## Claims

1. Aluminum-paper composite film (2, 44) for food containers, in particular produced by a method according to any one of claims 11 to 15,
- having an aluminum foil layer (4, 24) and
- having a paper layer (8, 28),
- wherein the aluminum foil layer (4, 24) and the paper layer (8, 28) are bonded together by an adhesive layer (6, 32) interposed therebetween,
**characterized**
- **in that** the aluminum foil layer has a thickness in the range of 30 - 150 µm, and
- **in that** the side of the paper layer (8, 28) facing away from the aluminum foil layer (4, 24) is coated with a release layer (10, 40) of release wax.

2. Aluminum-paper composite film according to claim 1,
**characterized in that** the paper layer (8, 28) is silicone-free.

3. Aluminum-paper composite film according to claim 1 or 2,
**characterized in that** an outer release layer of release wax is provided on the side of the aluminum layer facing away from the paper layer.

4. Aluminum-paper composite film according to any one of claims 1 to 3,
**characterized in that** the release layer (10, 40) of release wax and/or the outer release layer (12, 40') of release wax comprises the following constituents, in particular consists of these constituents to at least 95% by weight: vegetable oils and/or vegetable fats, wax esters and optionally additives.

5. Aluminum-paper composite film according to any one of claims 1 to 4, **characterized in that** the paper layer (8, 28) is grease-repellent.

6. Aluminum-paper composite film according to any one of claims 1 to 5, **characterized in that** the paper layer (8, 28) has wet-strength.

7. Aluminum-paper composite film according to any one of claims 1 to 6, **characterized in that** the adhesive layer (6, 32) consists of a heat-resistant adhesive, preferably a water-based emulsion adhesive, in particular a casein/latex emulsion adhesive.

8. Aluminum-paper composite film according to any one of claims 1 to 7, **characterized in that** the paper layer has a grammage in the range of 20 - 80 g/m².

9. Use of an aluminum-paper composite film according to any one of claims 1 to 8 for manufacturing a food container, in particular a grill or menu tray or a folding box for storing food or a folding box blank therefor.

10. Food container, in particular grill or menu tray or folding box for storing food, or folding box blank therefor, made of an aluminum-paper composite film according to any one of claims 1 to 8.

11. Method for producing an aluminum-paper composite film (2, 44), in particular an aluminum-paper composite film according to any one of claims 1 to 8,
- in which an aluminum foil layer (4, 24) with a thickness in the range of 30 - 150 µm and a paper layer (8, 28) are provided,
- in which an adhesive layer (6, 32) is applied to the aluminum foil layer (4, 24) and/or to the paper layer (8, 28),
- in which the aluminum foil layer (4, 24) and the paper layer (8, 28) with the adhesive layer (6, 32) arranged therebetween are laid one on top of the other to form a composite film (36), and
- wherein the side of the paper layer (8, 28) facing away from the aluminum foil layer (4, 24) has a coating or is coated with a release layer (10, 40) of release wax.

12. Method according to claim 11,
**characterized in that** the paper layer (8, 28) is silicone-free.

13. Method according to claim 11 or 12,
in which the side of the aluminum foil layer (8, 28) facing away from the paper layer (4, 24) is coated with an outer release layer (12, 40') of release wax.

14. Method according to any one of claims 11 to 13,
wherein the aluminum foil layer (4, 24) and the paper layer (8, 28) are pressed together with the adhesive layer (6, 32) disposed therebetween.

15. Method according to any one of claims 11 to 14,
wherein the composite film (36) is dried.

## Revendications

1. Film composite aluminium-papier (2, 44) pour récipient alimentaire, notamment obtenu par un procédé selon l'une quelconque des revendications 11 à 15,
- avec une couche de feuille d'aluminium (4, 24) et
- avec une couche de papier (8, 28),
- dans lequel la couche de feuille d'aluminium (4, 24) et la couche de papier (8, 28) sont collées l'une à l'autre par une couche de colle (6, 32) interposée entre elles, **caractérisé**
- **en ce que** la couche de feuille d'aluminium présente une épaisseur comprise dans la plage allant de 30 à 150 µm, et
- **en ce que** la face de la couche de papier (8, 28) opposée à la couche de feuille d'aluminium (4, 24) est revêtue d'une couche de séparation (10, 40) en cire de séparation.

2. Film composite aluminium-papier selon la revendication 1,
**caractérisée en ce que** la couche de papier (8, 28) est exempte de silicone.

3. Film composite aluminium-papier selon la revendication 1 ou 2,
**caractérisée en ce qu'**une couche de séparation extérieure en cire de séparation est prévue sur la face de la couche d'aluminium opposée à la couche de papier.

4. Film composite aluminium-papier selon l'une des revendications 1 à 3,
**caractérisée en ce que** la couche de séparation (10, 40) en cire de séparation et/ou la couche de séparation extérieur (12, 40') en cire de séparation comprend les composants suivants, en particulier est constituée à au moins 95 % en poids de ces composants: des huiles végétales et/ou des graisses végétales, des esters de cire et éventuellement des additifs.

5. Film composite aluminium-papier selon l'une quelconque des revendications 1 à 4, **caractérisée en ce que** la couche de papier (8, 28) est traité anti-graisse.

6. Film composite aluminium-papier selon l'une quelconque des revendications 1 à 5, **caractérisée en ce que** la couche de papier (8, 28) est résistante à l'humidité.

7. Film composite aluminium-papier selon l'une quelconque des revendications 1 à 6, **caractérisée en ce que** la couche de colle (6, 32) est constituée d'une colle résistant à la chaleur, de préférence une colle en émulsion à base d'eau, en particulier une colle en émulsion caséine/latex.

8. Film composite aluminium-papier selon l'une quelconque des revendications 1 à 7, **caractérisée en ce que** la couche de papier présente un grammage compris entre 20 et 80 g/m².

9. Utilisation d'un film composite aluminium-papier selon l'une quelconque des revendications 1 à 8 pour la fabrication d'un récipient alimentaire, en particulier d'une barquette de gril ou de menu ou d'une boîte pliante pour la conservation de produits alimentaires ou d'un flan de boîte pliante pour celle-ci.

10. Récipient alimentaire, en particulier barquette de gril ou de menu ou boîte pliante pour la conservation d'aliments, ou flan de boîte pliante pour celui-ci, fabriqué à partir d'une film composite aluminium-papier selon l'une quelconque des revendications 1 à 8.

11. Procédé de fabrication d'un film composite aluminium-papier (2, 44), notamment d'un film composite aluminium-papier selon l'une quelconque des revendications 1 à 8,
- dans lequel une couche de feuille d'aluminium (4, 24) d'une épaisseur comprise dans la plage allant de 30 à 150 µm et une couche de papier (8, 28) sont fournies,
- dans lequel une couche de colle (6, 32) est appliquée sur la couche de feuille d'aluminium (4, 24) et/ou sur la couche de papier (8, 28),
- dans lequel la couche de feuille d'aluminium (4, 24) et la couche de papier (8, 28) sont posées l'une sur l'autre avec la couche de colle (6, 32) disposée entre elles pour former un film composite (36) et
- dans lequel la face de la couche de papier (8, 28) opposée à la couche de feuille d'aluminium (4, 24) est revêtue ou est revêtue d'une couche de séparation (10, 40) en cire de séparation.

12. Procédé selon la revendication 11,
**caractérisé en ce que** la couche de papier (8, 28) est exempte de silicone.

13. Procédé selon la revendication 11 ou 12,
dans lequel la face de la couche de feuille d'aluminium (8, 28) opposée à la couche de papier (4, 24) est revêtue d'une couche de séparation extérieure (12, 40') en cire de séparation.

14. Procédé selon l'une quelconque des revendications 11 à 13,
dans lequel la couche de feuille d'aluminium (4, 24) et la couche de papier (8, 28) sont pressées l'une contre l'autre avec la couche d'adhésif (6, 32) interposée entre elles.

15. Procédé selon l'une quelconque des revendications 11 à 14,
dans lequel le film composite (36) est séché.
